# EUROPEAN PATENT SPECIFICATION

(11) **EP 1 117 563 B1**
(45) Date of publication and mention of the grant of the patent: **08.10.2003**
(21) Application number: 99935191.9
(22) Date of filing: 23.07.1999
(51) Int. Cl.: B60R 7/12

(54) **CONTAINER FOR STORING AND DRYING AN UMBRELLA IN A MOTOR VEHICLE**
KASSETTE ZUM AUFBEWAHREN UND TROCKNEN VON REGENSCHIRMEN IN KRAFTFAHRZEUGEN
CONTENEUR DE STOCKAGE ET DE SECHAGE D'UN PARAPLUIE DANS UN VEHICULE AUTOMOBILE

(43) Date of publication of application: 25.07.2001
(73) Proprietor: Plasfil - Plasticos da Figueira, Lda., 3081-852 Figueira da Foz Codex (PT)
(72) Inventor: SIMOES GAMEIRO SIZUDO, Manuel, P-3080 Figueira da Foz (PT)
(74) Representative: Pereira da Cruz, Joao
(86) International application number: PT9900013
(87) International publication number: WO01007292

(56) References cited:
- DE-A- 3 812 571
- DE-A- 19 648 693
- PATENT ABSTRACTS OF JAPAN vol. 1995, no. 11, 26 December 1995 (1995-12-26) & JP 07 223491 A (HINO MOTORS LTD), 22 August 1995 (1995-08-22)
- PATENT ABSTRACTS OF JAPAN vol. 017, no. 414 (M-1456), 3 August 1993 (1993-08-03) & JP 05 085272 A (SUZUKI MOTOR CORP), 6 April 1993 (1993-04-06)

## Description

The present invention relates to a container for storing and drying an umbrella in motor vehicles.

### Background to the invention

It is commonly known that storing an umbrella inside a motor vehicle, especially when they are wet, is a task which if not complicated is at least very unpleasant since it always causes the place where the umbrella is stored and the user's hands and clothes to get wet.

As well as the inconvenience mentioned above, it should be emphasised that an umbrella placed on the floor of a motor vehicle may move around when the actual vehicle accelerates and brakes, which can have serious consequences if the umbrella is placed on the driver's side, since it may interfere with normal driving.

In order to avoid these inconveniences, a few umbrella containers are known.

Of the documents known to the applicant, mention must be made of the following documents, among others: US 4445720, US 4807920, US 4795067. US 5800004, US 5709328, EP 0325896, EP 0376153, EP 0718154, EP 0754132 and WO 96/22198. All these documents relate to containers for umbrellas which consist of a box for storing the umbrella and possibly a container for collecting the water which may drain therefrom.

A container according to to preamble of claim 1 is disclosed in US 5 800 004 A.

### Objective of the invention

Thus, the basic objective of the present invention is to design an umbrella container for the inside of motor vehicles with an automatic drying system and systems for controlling, detecting and ejecting the umbrella.

The intention is therefore to store an umbrella inside a motor vehicle in a container which is aesthetically adapted to the inside of said vehicle, namely the doors, in order to simply and effectively dry said umbrella without the inconveniences mentioned above.

### Short description of the drawings

The description hereunder makes reference to two sheets of drawings which, by way of example and without any restrictive nature, present an embodiment of the invention in which:
Figure 1 represents a perspective view of the container which is the subject of the invention;
Figure 2 represents a view of the components which make up the subject of the invention;
Figure 3 represents a schematic diagram of the functioning of the systems installed inside the container for umbrellas which are the subject of this invention.

### Detailed description of the invention

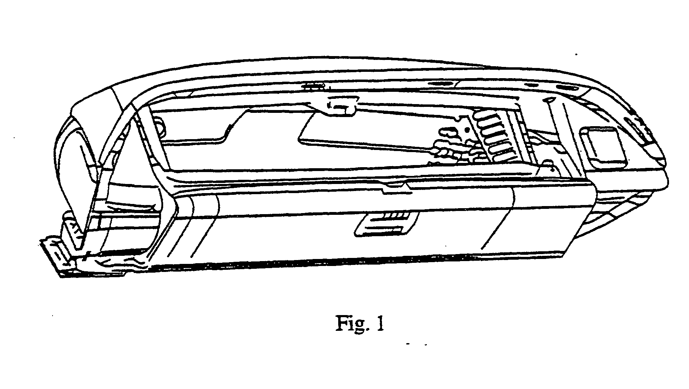

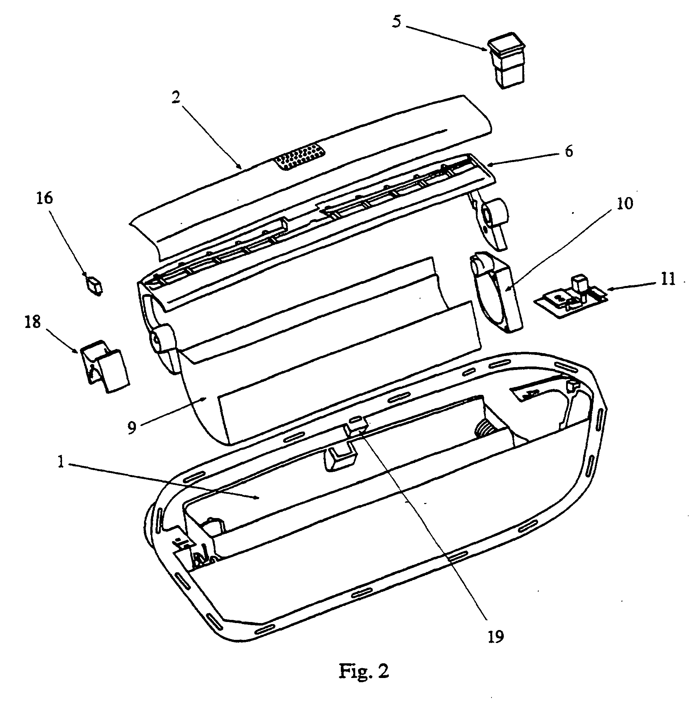

As shown in figures 1 and 2, the container which is the subject of the model consists essentially of a box (1) with a lid (2), inside of which the umbrella is placed, said box containing the drying system which comprises a heating plate (9) and a ventilator (10), the system for elevating the umbrella which comprises an elevator (18) activated by opening the box in order to remove the umbrella, and also a detection and control system which comprises a detector (16) and a control element (11).

The shape of the box (1) is suitable in order for it to be adapted to the interior of motor vehicle bodies, preferably the door area. It consists of a receptacle appropriate for the size of umbrellas; the box (1) is closed by a top lid (2). Said top lid (2) is attached to the inside of a door (6) which is articulated by means of arms at the back of the box (1). The ends of the box (1) are opened in order to force the hot air to circulate.

Inside the box (1) there is a heating plate (9) in a curved "U" shape which is placed inside the box (1), said plate being activated by the switch (5) which is accessed from the outside of the box. At the ends of the plate a ventilator of a suitable size is coupled, which forces the hot air to circulate around the box thereby drying the umbrella and ensuring that all the humidity in the box (1) evaporates.

The container which is the subject of this invention is also equipped with an electronic device (11) for data acquisition and processing and controlling the peripheral systems which control the drying process. These devices are the humidity sensor (not depicted), the heating resistor (5) and the ventilator (10).

Whenever the user releases the lid opening device (19), the elevator (18) is activated in order to raise the umbrella to a position in which the user can remove it from the box (1).

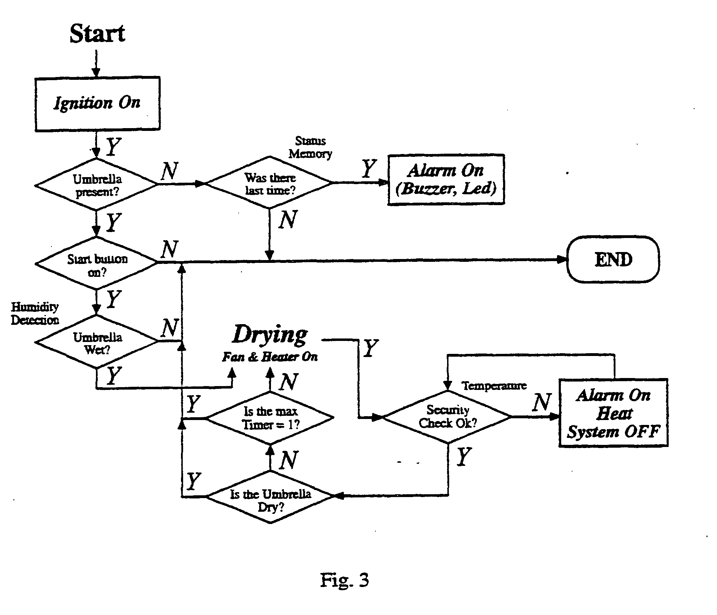

The sequence of operations is shown in the flow diagram represented in figure 3.

As shown in said flow diagram, the invention also includes a safety system consisting of a timer, a temperature sensor and an LED which is activated when it reaches a certain temperature. There is also a buzzer which is activated when the vehicle is started up without the umbrella having been placed inside the container, when the controller module memory contains the information that the umbrella was in the right place during the last journey, which is typical of a situation in which the umbrella is forgotten.

All the activating and safety systems are controlled by the electronic control (11).

## Claims

1. Container for storing and drying umbrellas in motor vehicles, comprising a box (1) and a top lid (2), an automatic drying system (19), a system (18) for elevating the umbrella, a system (16) for detecting the presence of an umbrella, a safety and control system which, through a sequence of operations, guarantee that a wet umbrella placed insider the box will be dried within a certain amount of time, **characterised in that** the container further comprises a humidity detection system, and an alarm system.

2. Container for storing and drying umbrellas in motor vehicles according to the previous claim, **characterised in that** the drying system is activated by a switch (5) accessed from the outside of said box (1) whenever the humidity sensor detects humidity in the umbrella, said system functioning until a fixed amount of time set by a timer runs out or when the level of humidity measured in the sensor indicates that the umbrella is already dry.

3. Container for storing and drying umbrellas in motor vehicles according to claim 1, **characterised in that** the umbrella elevation system, which consists essentially of an elevator (18), is activated whenever the user releases a lid (2) opening device.

4. Container for storing and drying umbrellas in motor vehicles according to claim 1, **characterised in that** the system for detecting the umbrella inside the box (1) operates by means of a sensor (16) which detects its presence.

5. Container for storing and drying umbrellas in motor vehicles according to claim 1, **characterised in that** the humidity detection system operates by means of a humidity sensor.

6. Container for storing and drying umbrellas in motor vehicles according to claim 1, **characterised in that** the safety system operates by means of a temperature sensor and the control system operates by means of an electronic control module (11) which controls all the other systems mentioned above.

7. Container for storing and drying umbrellas in motor vehicles according to claim 1, **characterised in that** the alarm system used consists of buzzers and LEDs.

8. Container for storing and-drying umbrellas in motor vehicles according to claim 1, **characterised in that** it has LEDs which provide warnings regarding the situation or functioning.

9. Container for storing and drying umbrellas in motor vehicles according to claim 1, **characterised in that** there is a warning alarm system for cases of overheating, which activates an LED.

## Patentansprüche

1. Behälter zum Verstauen und Trocknen von Regenschirmen in Motorfahrzeugen, umfassend: einen Kasten (1) und einen oberen Deckel (2), ein automatisches Trocknungssystem (19), ein System (18) zum Anheben des Regenschirms, ein System (16) zum Nachweisen des Vorhandenseins eines Regenschirms, ein Sicherheits- und Steuersystem, welche mittels einer Abfolge von Operationen garantieren, daß ein im Inneren des Kastens befindlicher, nasser Regenschirm innerhalb einer gewissen Zeitspanne getrocknet wird, **gekennzeichnet dadurch daß** der Behälter auch ein Feuchtigkeitserkennungssystem und ein Alarmsystem umfaßt.

2. Behälter zum Verstauen und Trocknen von Regenschirmen in Motorfahrzeugen nach dem vorhergehenden Anspruch, **dadurch gekennzeichnet daß** das Trocknungssystem aktiviert wird durch einen Schalter (5), der von außerhalb des Kastens (1) zugänglich ist, wenn der Feuchtigkeitssensor Feuchtigkeit in dem Regenschirm erkennt, wobei das System solange arbeitet, bis eine feste mit Hilfe eines Timers eingestellte Zeitspanne abgelaufen ist, oder bis das von dem Sensor gemessene Maß an Feuchtigkeit angibt, daß der Regenschirm bereits trocken ist.

3. Behälter zum Verstauen und Trocknen von Regenschirmen in Motorfahrzeugen nach Anspruch 1, **dadurch gekennzeichnet daß** das Regenschirm-Anhebesystem, welches im wesentlichen aus einer Hubvorrichtung (18) besteht, immer dann aktiviert wird, wenn der Benutzer eine Öffnungseinrichtung des Deckels (2) freigibt.

4. Behälter zum Verstauen und Trocknen von Regenschirmen in Motorfahrzeugen nach Anspruch 1, **dadurch gekennzeichnet daß** das System zum erkennen des Regenschirms im Inneren des Kastens (1) mit Hilfe eines Sensors (16) arbeitet, der das Vorhandensein des Regenschirms erfaßt.

5. Behälter zum Verstauen und Trocknen von Regenschirmen in Motorfahrzeugen nach Anspruch 1, **dadurch gekennzeichnet daß** das Feuchtigkeitserkennungssystem mit Hilfe eines Feuchtigkeitssensors arbeitet.

6. Behälter zum Verstauen und Trocknen von Regenschirmen in Motorfahrzeugen nach Anspruch 1, **dadurch gekennzeichnet daß** das Sicherheitssystem mit Hilfe eines Temperaturfühlers arbeitet, und das Steuersystem mit Hilfe eines elektronischen Steuermoduls (11) arbeitet, welches sämtliche übrigen, oben erwähnten Systeme steuert.

7. Behälter zum Verstauen und Trocknen von Regenschirmen in Motorfahrzeugen nach Anspruch 1, **dadurch gekennzeichnet daß** das Alarmsystem aus Summern und Leuchtdioden besteht.

8. Behälter zum Verstauen und Trocknen von Regenschirmen in Motorfahrzeugen nach Anspruch 1, **dadurch gekennzeichnet daß** er Leuchtdioden besitzt die vor Situationen oder Funktionsarten warnen.

9. Behälter zum Verstauen und Trocknen von Regenschirmen in Motorfahrzeugen nach Anspruch 1, **dadurch gekennzeichnet daß** es ein Warn-Alarm-System für den Fall einer Überhitzung gibt, welches eine Leuchtdiode aktiviert.

## Revendications

1. Conteneur pour ranger et sécher des parapluies dans des véhicules à moteur, comprenant un caisson (1) et un couvercle supérieur (2), un système de séchage automatique (19), un système (18) pour soulever le parapluie, un système (16) pour détecter la présence d'un parapluie, un système de sûreté et de commande, qui par une suite d'opérations, garantissent qu'un parapluie mouillé placé à l'intérieur du caisson sera séché dans un certain délai, caractérizé en ce que le conteneur, comprend encore un système de détection d'humidité et un système d'alerte.

2. Coteneur pour ranger et sécher des parapluies dans des véhicules à moteur selon la revendication précédentes, **caractérisé en ce que** le système de séchage est mis en marche par un commutateur (5) accessible de l'extérieur dudit caisson (1) chaque fois que le détecteur d'humidité détecte de l'humidité dans le parapluie, ledit système fonctionnant jusqu'à l'épuisement d'un laps de temps fixe établi par une minuterie ou jusqu'au moment où le niveau d'humidité mesuré dans le détecteur indique que le parapluie est déjà sec.

3. Conteneur pour ranger et sécher des parapluies dans des véhicules à moteur selon la revendication 1, **caractérisé en ce que** le système pour soulever un parapluie, qui est essentiellement constitué par un élèvateur (18), est mis en marche chaque fois que l'utilisateur lâche un dispositif d'ouverture du couvercle (2).

4. Conteneur pour ranger et sécher des parapluies dans des véhicules à moteur selon la revendication 1, **caractérisé en ce que** le système pour détecter le parapluie à l'intérieur du caisson (1) fonctionne à l'aide d'un détecteur (16) qui déctecte sa présence.

5. Conteneur pour ranger et sécher des parapluies dans des véhicules à moteur selon la revendication 1, **caractérisé en ce que** le système de détection d'humidité fonctionne à l'aide d'un détecteur d'humidité.

6. Conteneur pour ranger et sécher des parapluies dans des véhicules à moteur selon la revendication 1, carcatérisé en ce que le système de sûreté fonctionne à l'aide d'un détecteur de température et le système de commande fonctionnement à l'aide d'un module électronique de commande (11) qui commande tous les autres systèmes mentionnés plus haut.

7. Conteneur pour ranger et sécher des parapluies dans des véhicules à moteur selon la revendication 1, **caractérisé en ce que** le système d'alerte utilisé est constitué par des vibreurs et des DEL.

8. Conteneur pour ranger et sécher des parapluies dans des véhicules à moteur selon la revendication 1, **caractérisé en ce qu'**il comporte des DEL qui fournissent des avertissements concernant la situation ou le fonctionnement.

9. Conteneur pour ranger et sécher des parapluies dans des véhicules à moteur selon la revendication 1, **caractérisé en ce qu'**il y a un système d'alerte pour avertir en cas de surchauffe, qui active une DEL.
